Europäisches Patentamt

European Patent Office

Office européen des brevets

(19)

(11) Publication number : **0 448 532 A2**

(12) **EUROPEAN PATENT APPLICATION**

(21) Application number : **91850034.9**

(22) Date of filing : **13.02.91**

(51) Int. Cl.$^5$ : **F16H 13/08**

(30) Priority : **05.03.90 SE 9000759**

(43) Date of publication of application :
**25.09.91 Bulletin 91/39**

(84) Designated Contracting States :
**DE FR GB IT NL SE**

(71) Applicant : **AKTIEBOLAGET ELECTROLUX**
**Luxbacken 1**
**S-105 45 Stockholm (SE)**

(72) Inventor : **Hagqvist, Peter Henning**
**Herr Stens Väg 56**
**S-125 30 Älvsjö (SE)**

(74) Representative : **Hagelbäck, Evert Isidor et al**
**c/o AB Electrolux Corporate Patents &**
**Trademarks**
**S-105 45 Stockholm (SE)**

(54) **Variable gear preferably for small high speed motors.**

㊼   This invention relates to a gear for small high speed motors. The gear comprises an input and an output shaft (11 and 21) the output shaft (21) being surrounded by two concentric annular plates (15, 16) being supported for rotating motion on the output shaft (21). The plates (15, 16) are in engagement with rolling elements (18) applied in a holder (20) for the elements secured on the output shaft (21) the plates being driven from the input shaft (11) via a drive means (12) placed between and abutting the two plates.

EP 0 448 532 A2

# VARIABLE GEAR PREFERABLY FOR SMALL HIGH SPEED MOTORS

This invention relates to a gear preferably for small high speed motors.

Hand tools and small domestic machines, type food preparing machines, are usually driven by an electric motor having such a size that it is capable of producing large moments at low speeds the motor being voltage or thyristor controlled in order to give a speed which is variable. This means that rather large motors have to be choosen. It is also possible to refrain from the flexibility of controlling the speed electrically and to use a conventional mechanical gear in order to gear down the speed from a smaller high speed motor. This however has the drawback that the gear, which is space demanding, occupies the space which is saved by choosing a smaller motor so that the result is that neither space nor weight it saved. Moreover the efficiency for some types of gear which is used for this purpose is rather low.

The purpose of this invention is to achieve a gear which mechanically and with simple machine elements creates a continuously variable downshift with large gear proportions of a high speed motor. Since the high speed motor has a larger power/weight relation than other types of motors a compact system is created where the motor always operates at the best moment/speed point. The arrangement offers a variable gear change where the speed of the output shaft for instance can be varied between 0 and 2000 rpm.

The purpose is achieved by means of a device having the characteristics mentioned in the claims.

An embodiment of the invention will now be described with reference to the accompanying drawing which diagramatically shows a section through a gear according to the invention.

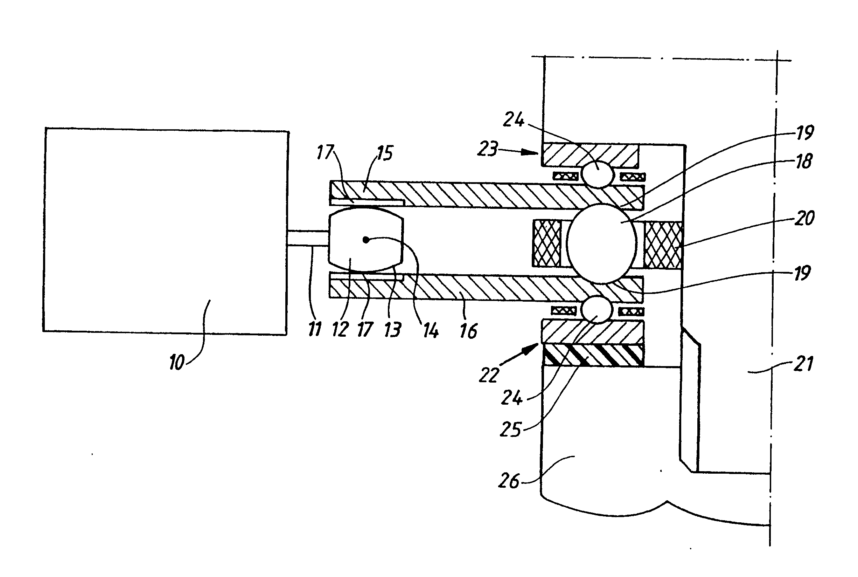

In the Figure 10 is a high speed motor with a shaft 11 being the input shaft of the gear. The shaft 11 has at its end a drive roller 12 with a cambered surface 13. The drive roller 12 can together with the shaft 11 and the motor 10 be turned about an axis 14 extending perpendicular to the plane of the paper. At the opposite sides of the drive roller there are annular plates 15 and 16 which by means of spring forces are pressed towards the drive roller 12 so that a friction engagement is established between the plates and the drive roller. This effect might be strengthened by providing the surface of the roller and/or an outer peripheral part of the plates 15, 16 with a friction layer 17.

Between the plates 15 and 16 there is at the radially inner part several rolling elements 18 running in recesses 19 in the plate. These rolling elements, for instance being ball-shaped, cooperate with a holder 20 for the rolling elements the holders being fixed to an output shaft 21. On each side of the plates 15, 16 there is a thrust bearing 22 and 23 with balls 24 between which the plates 15 and 16 and the rolling elements 18 are clamped by means of spring 25 resting against a nut 26 on the output shaft.

The device operates in the following way. At the working condition shown in the Figure the abutting points between the drive roller 12 and the plate 15 and 16 are placed at equal distances from the rolling elements 18. This means that when the drive roller 12 starts to rotate by means of the motor 10 the plates 15 and 16 will rotate about the output shaft 21 with the same speed but in different directions. This means that the holder 20 and hence the output shaft 21 stands idle.

In order to achieve a rotating motion of the output shaft 21 the motor 10, the shaft 11 and the roller 12 is turned about the axis 14. If the motor is moved upwards in the Figure this means that the abutting point between the drive roller 12 and the plate 15 is moved outwards from the output shaft 21 whereas the abutting point between the drive roller 12 and the plate 16 is moved inwards towards the input shaft. This means that the rotation speed increases for the plate 16 and decreases for the plate 15 which in turn means that the rolling element 18, depending on the change of relative movement between the plates 15 and 16, act on the holder 20 and hence the output shaft 21 so that it rotates. By increasing or decreasing the angle about the axis 14 it is possible to achieve a continous variation of the speed of the output shaft as well as it is possible to drive the output shaft in the other direction by turning the motor downwards in the Figure. The speed of the output shaft is half the difference between the speed of the two plates.

## Claims

1. Gear for a small high speed motor, comprising an input and an output shaft (11 and 21), **characterized** in that the output shaft (21) is surrounded by two concentric plates (15, 16) supported for rotating motion on the output shaft the plates abutting rolling elements (18) applied in a holder (20) which is secured on the output shaft (21) the plates being driven from the input shaft (11) via a drive means (12) which is placed between the two plates.

2. Gear according to claim 1, **characterized** in that the rotating motion of the drive means (12) is transferred to the plates (15, 16) by friction engagement.

3. Gear according to claim 1 or 2, **characterized** in that the drive means (12) is shaped as a roller having a surface which at least partly is cambered.

4. Gear according to any of the preceding claims, **characterized** in that the drive means (12) is turnably arranged about an axis (14) placed between the two plates (15, 16) and which is directed tangentially with respect to the output shaft (21).

5. Gear according to any of the preceding claims, **characterized** in that the drive means (12) is placed near the periphery of the plates (15, 16).

6. Gear according to any of the preceding claims, **characterized** in that the motor (10) is arranged turnably together with the input shaft (11) and the drive means (12).

7. Gear according to any of the preceding claims, **characterized** in that the plates (15, 16) are arranged to be pressed towards each other.

8. Gear according to claim 7, **characterized** in that the plates (15, 16) are pressed towards each other by means of a spring (25).

9. Gear according to any of the preceding claims, **characterized** in that the drive means (12) and/or the parts of the plates (15, 16) engaging the drive means being provided with friction layers (17).

10. Gear according to any of the preceding claims, **characterized** in that the two plates (15, 16) are clamped between two thrust bearings (24, 25).